# EUROPEAN PATENT SPECIFICATION

(11) **EP 1 738 893 B1**
(45) Date of publication and mention of the grant of the patent: **10.09.2008**
(21) Application number: 06012886.5
(22) Date of filing: 22.06.2006
(51) Int. Cl.: B29D 30/30, B29D 30/60, B60C 19/08

(54) **Hybrid rubber tape, vehicle tire and method of manufacture thereof**
Hybrides Gummiband, Luftreifen und Verfahren zu seiner Herstellung
Bande de caoutchouc hybride, pneu et son procédé de fabrication

(30) Priority: 01.07.2005 JP 2005194119
(43) Date of publication of application: 03.01.2007
(73) Proprietor: Sumitomo Rubber Industries, Ltd., Kobe-shi, Hyogo-ken (JP)
(72) Inventor: Nobuchika, Hideo, Chuo-ku Kobe-shi Hyogo-ken (JP); Uchida, Mamoru, Chuo-ku Kobe-shi Hyogo-ken (JP)
(74) Representative: Manitz, Finsterwald & Partner GbR

(56) References cited:
- EP-A- 0 681 931
- EP-A- 0 875 366
- EP-A- 1 175 992
- EP-A- 1 632 367
- DE-A1-1102004 052 35
- US-A- 6 070 630
- PATENT ABSTRACTS OF JAPAN vol. 1999, no. 13, 30 November 1999 (1999-11-30) -& JP 11 227415 A (BRIDGESTONE CORP), 24 August 1999 (1999-08-24)

## Description

The present invention relates to a hybrid rubber tape, a vehicle tire and a method for manufacturing said vehicle tire, more particularly to a manufacturing process for a tire component made up of windings of the hybrid rubber tape.

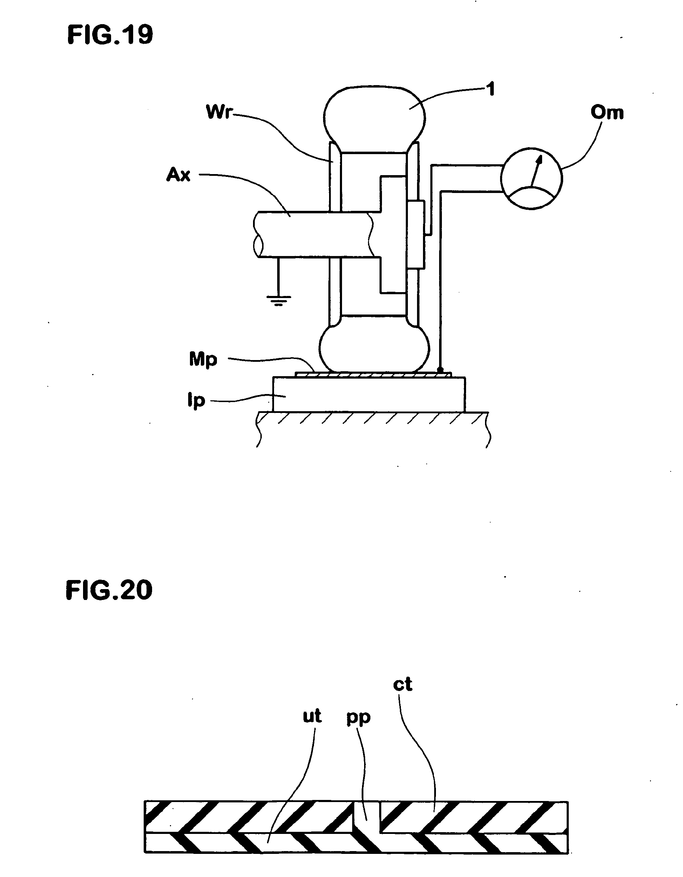

In recent years, in order to improve the rolling resistance and wet grip performance of a pneumatic tire, the use of silica rich compositions as the tread rubber is proposed, for example, as disclosed in US Patent 5942069. As the silica rich compositions are poor in the electrical conductivity, the electric resistance between the tread and bead of the tire becomes very high, namely, the tire as whole becomes an insulator. Accordingly, static electricity is liable to build up on the vehicle body. Therefore, in the case of us Patent 5942069, as schematically shown in Fig.20, a base tread rubber (ut) made of a conductive rubber composition is disposed on the underside of the silica rich tread rubber (ct), and the base tread rubber (ut) is provided with a part (pp) penetrating through the silica rich tread rubber and extending to the tread face to discharge static electricity.

On the other hand, the tread portion of a pneumatic tire is usually provided with tread grooves forming a tread pattern. Therefore, there is a possibility that the groove edges become very close to the boundary between the penetrating part (pp) and silica rich tread rubber (ct). The penetrating part (PP) and silica rich tread rubber (ct) are not so small, and accordingly, the shear stress therebetween is liable to increase. These are undesirable in view of separation failure, uneven wear and the like. Further, it is difficult to accurately position the penetrating part (PP) especially the boundary because the unvulcanized rubber flows during vulcanizing the tire. Thus, the tread design freedom is limited.

The subject matter of the pre-characterizing portions of the independent claims is known from EP-A-0 875 366. Other types are known from JP 11-227 415 A and EP-A-1 175 992.

It is therefore, an object of the present invention to provide a tape, a tyre and a method for manufacturing a vehicle tire, in which, by using a narrow-width thin tape made of a conductive rubber composition and a high-performance rubber composition such as silica rich composition, both of a good electrical conductivity and advantages of the high-performance rubber composition can be obtained without sacrificing tire performance, design freedom and the like.

This object is achieved by the features of the independent claims.

Embodiments of the present invention will now be described in detail in conjunction with the accompanying drawings.
Figs.1-3 are not part of the invention.
Figs.4-6 are cross sectional views each showing an example of the hybrid rubber tape according to the present invention.
Fig.7 is a schematic cross sectional view showing a head and die of an extruder for producing the hybrid rubber tape.
Fig.8 is a front view of the extruder head showing an arrangement of the outlets thereof corresponding to the hybrid rubber tape shown in Fig.1
Fig.9 shows another arrangement of the outlets corresponding to the hybrid rubber tape shown in Fig.4.
Fig.10 shows still another arrangement of the outlets corresponding to the hybrid rubber tape shown in Fig.5.
Fig.11 shows still more another arrangement of the outlets corresponding to the hybrid rubber tape shown in Fig.6.
Fig.12 is a cross sectional view of a pneumatic tire according to the present invention, of which tire component (a tread rubber) is formed by overlap winding the hybrid rubber tape.
Figs.13-14 are schematic cross sectional views for explaining manufacturing processes for the tread rubber.
Fig.15 is a schematic cross sectional view showing another example of the tread rubber.
Fig.16 is a schematic cross sectional view showing still another example of the tread rubber.
Fig.17 is a schematic cross sectional view for explaining manufacturing processes for a green tire.
Fig.18 is an enlarged schematic cross sectional view showing windings of the hybrid rubber tape.
Fig.19 is a diagram for explaining a method for measuring the electric resistance of a tire.
Fig.20 is a schematic cross sectional view showing a tread rubber according to the prior art.

According to the present invention, a tire component is formed by winding a hybrid rubber tape T a large number of times.

The hybrid rubber tape T is an unvulcanized rubber tape composed of a high-performance rubber composition RH and a conductive rubber composition RC. when vulcanized, the volume resistivity of the conductive rubber composition RC is smaller than the volume resistivity of the high-performance rubber composition RH.

In connection with the number of windings, if the width ws of the hybrid rubber tape T is less than 5 mm and/or the thickness Ts thereof is less than 0.5 mm, then the production efficiency tends to decrease. If the width ws is more than 30 mm and/or the thickness Ts is more than 2.0 mm, then it becomes difficult to reproduce the detail of the target cross sectional shape of the tire component. Therefore, it is preferable that the hybrid rubber tape T has a width ws in a range of 5 to 30 mm, and a thickness Ts in a range of 0.5 to 2.0 mm.

Usually, the hybrid rubber tape T is produced with a constant width ws and a constant thickness Ts along the length thereof. However, at the time of winding the hybrid rubber tape T, the width ws and/or thickness Ts may be varied intentionally by applying a variable tension, compressive force or the like. Further, the cross sectional shape of the hybrid rubber tape T may be varied at the time of winding although the hybrid rubber tape T is usually produced with a constant cross sectional shape along the length.

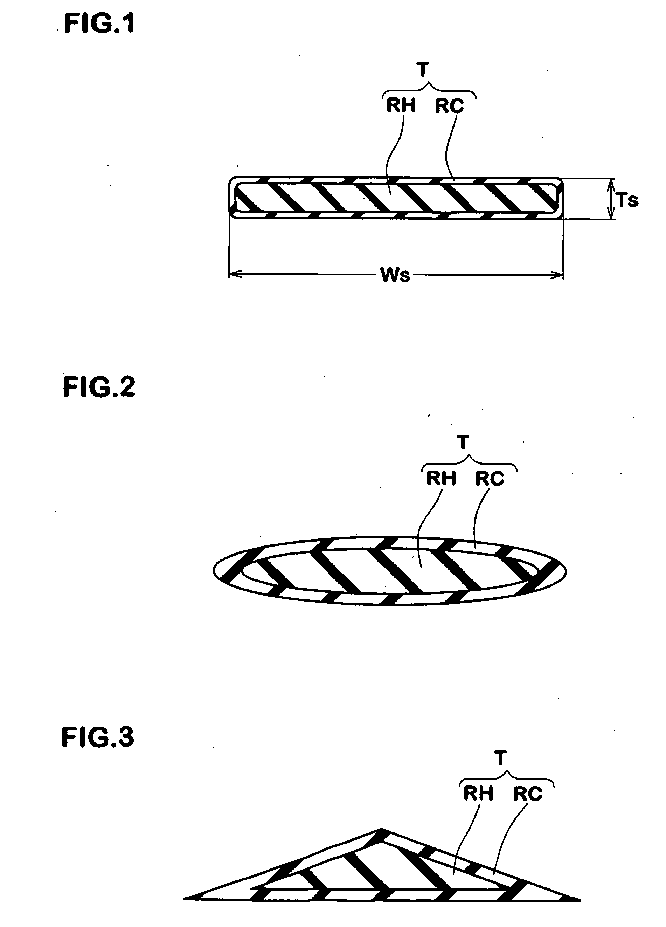

Figs.1-3 show examples of the cross sectional shapes. In Fig.1, the shape is a flattened rectangle, in Fig.2 an oval, in Fig.3 a flat triangle. Aside from these shapes, various shapes, e.g. rhombus, circle and the like may be used too.

These limitations to the size and this description are also applied to the undermentioned rubber tapes 16 and 20.

The high-performance rubber composition RH in this embodiment is a silica rich composition, containing a relatively large amount of silica as the main reinforcing filler. The silica content is at least 30 parts by weight with respect to 100 parts by weight of elastomer.

In the case of the undermentioned tread rubber, such a silica rich composition enhances wet performance due to higher hysteresis loss at low temperatures, and reduces rolling resistance due to low hysteresis loss at high temperatures. Thus, running performance can be improved. With this view, the silica content in the high-performance rubber composition RH is preferably more than 40 parts by weight with respect to 100 parts by weight of elastomer. However, from the viewpoint of the material cost and leveling-off of the effects, the silica content is less than 100 parts by weight, preferably less than 80 parts by weight, more preferably less than 60 parts by weight. As a result, low rolling resistance and good wet grip performance can be achieved in a well-balanced manner.

As to the silica, from the viewpoint of reinforcing effect and rubber processability, preferably used is silica having a surface area determined based on nitrogen adsorption (BET) of from 150 to 250 sq.m/g, and a dibutyl phthalate oil absorption (DBP) of not less than 180 ml/100g and also having the nature of a colloid.

As to silane coupling agent, vis(triethoxysilylpropyl) tetrasulfide, alpha-mercaptpropyltrimethoxysilane is preferred.

As to the elastomer in the high-performance rubber composition RH: natural rubber (NR); butadiene rubber (BR) namely butadiene polymer; emulsion-polymerized styrene butadiene rubber (E-SBR); solution-polymerized styrene butadiene rubber (S-SBR); synthesis polyisoprene rubber (IR) namely isoprene polymer; nitrile rubber (NBR) namely a copolymer of butadiene and acrylonitrile; chloroprene rubber (CR) namely chloroprene polymer, can be used alone or in combination.

Even in the high-performance rubber composition RH, a smaller amount of carbon black can be added in order to adjust the elastic properties such as elasticity and hardness. However, if the amount of carbon black is increased, the advantages of silica such as low rolling resistance are nullified, and further the rubber tends to become excessively hard. Therefore, it is preferable that the weight of the carbon black is not more than 10 % of the total weight of all the reinforcing filler.

Aside from carbon black and silica, aluminium hydroxide, calcium carbonate and the like may be used as the reinforcing filler.

As a result, the high-performance rubber composition RH may have a volume resistivity of more than 1.0X10⁸ ohm·cm. This however, does not mean that an insulative rubber should be used as the high-performance rubber composition RH. It is just that the high performance rubber used is insulative.

In this specification, the volume resistivity refers to a value measured with an ohm meter (ADVANTESTER 8340A) at a temperature of 25 deg.c, a relative humidity of 50 % and a applied voltage of 500V, using a 150mmx150mmx2mm specimen.

In order that the conductive rubber composition RC is provided with a lower volume resistivity than that of the high-performance rubber composition RH, the conductive rubber composition RC contains electroconductive filler.
In this embodiment, the conductive rubber composition RC contains a greater amount of carbon black as the reinforcing filler and also as the electroconductive filler. With respect to 100 parts by weight of elastomer, the carbon black content is preferably not less than 10 parts by weight, more preferably not less than 20 parts by weight.
However, from the viewpoint of the material cost and leveling-off of the effects, the carbon black content is preferably not more than 100 parts by weight, more preferably not more than 80 parts by weight.

In the conductive rubber composition RC, a small amount of another kind of reinforcing filler such as silica can be added. But, to prevent the electric resistance from increasing, it is preferable that the weight of the carbon black is at least 30 % of the total weight of all the reinforcing filler.

Usually, from the aspect of production cost, carbon black is used as the electroconductive filler to be added. However, other kinds of electroconductive filler such as electroconductive powder and electroconductive short fiber can be used in stead of or in combination with carbon black. For example, as the electroconductive powder: metal powder, e.g. copper, nickel, iron, silver and the like and various alloys; and metallic compound powder, e.g. tin oxide, indium oxide and the like; may be used. If metal powder whose mean particle size is at the same level as carbon black, namely, about 10 nm to about 100 nm is used in stead of carbon black, the above limitation to the carbon black content may be also applied to the metal powder. As the electroconductive short fiber, carbon fiber, metal fiber, metal whisker, metal coated organic fiber and the like may be used. Preferably, the electroconductive short fiber is used in combination with the electroconductive powder inclusive of carbon black.

In any case, after vulcanization, the volume resistivity of the conductive rubber composition RC should be less than 1.0×10⁸ ohm·cm, preferably not more than 1.0×10⁷ ohm·cm.

In the hybrid rubber tape T, the conductive rubber composition RC forms at least a part of the surface of the tape T.

in the examples shown in Figs.1-3, the high-performance rubber composition RH is fully covered with the conductive rubber composition RC. Accordingly, the conductive rubber composition RC forms the entire surface of the hybrid rubber tape T.

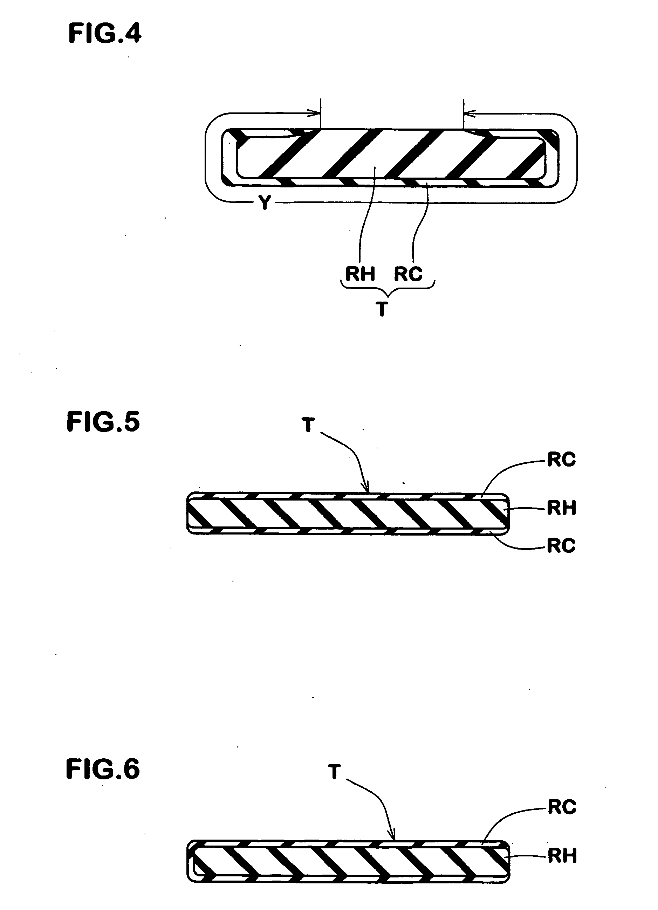

In Figs.4-6 showing further examples of the hybrid rubber tape T, the conductive rubber composition RC does not form the entire surface of the hybrid rubber tape T. Thus, the high-performance rubber composition RH is exposed at the surface. Of course, this feature can be combined with various cross sectional shapes although only flattened rectangular shapes are shown in Figs.4-6.
In Fig.4, the high-performance rubber composition RH is exposed only in a center part of one side of the tape. Thus, the other side and both edges of the tape are completely covered with the conductive rubber composition RC.
In Fig.5, the high-performance rubber composition RH is exposed only at both edges of the tape. Thus, both sides of the tape are completely covered with the conductive rubber composition RC.
In Fig.6, the high-performance rubber composition RH is exposed only at one of the edges of the tape. Thus, the other edge and both sides of the tape are completely covered with the conductive rubber composition RC.

In any way, in the cross section of the hybrid rubber tape T, the total length Y of the conductive rubber composition RC measured along the surface of the tape T has to be at least 70 %, preferably more than 80 % of the overall length, whereby even if the tire components to be produced have various cross sectional shapes, the conductive rubber composition RC appears at the surface of the tire component.

Furthermore, in the cross section of the hybrid rubber tape T, the occupied area of the conductive rubber composition RC is preferably not less than 3 %, more preferably not less than 5 %, but preferably not more than 20 %, more preferably not more than 15 % of the overall cross sectional area of the tape T.

In order to produce such a long hybrid rubber tape T, an extruder can be used.

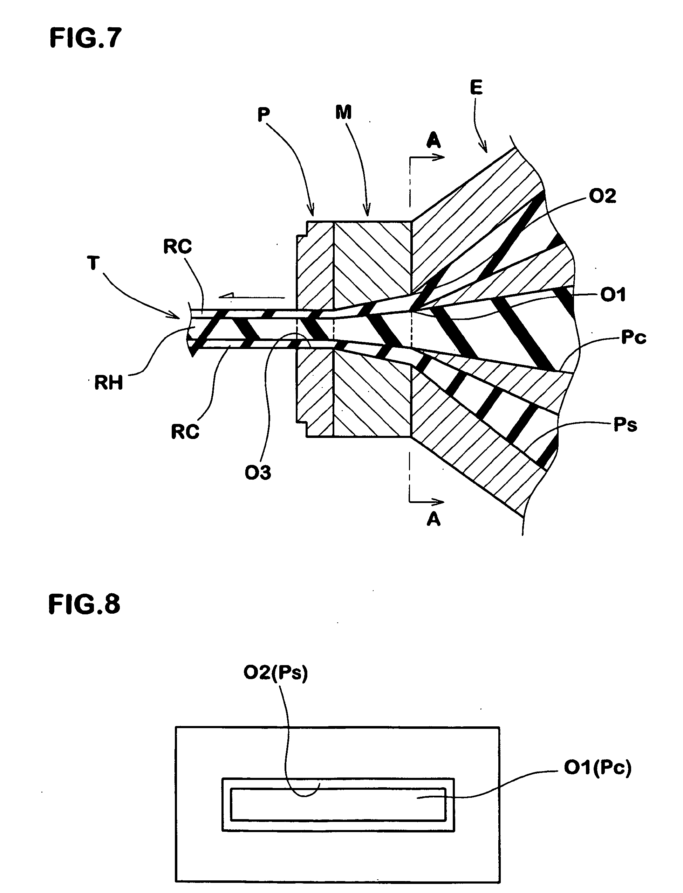

Using a multi-screw extruder, the tape T can be produced by one-step method. Fig.7 shows the head E of such twin-screw extruder. The extruder head E is provided with a center passage Pc and a surrounding passage Ps both extending to the front end. The high-performance rubber composition RH is compressed into the center passage Pc by a screw (not shown) and conveyed towards the outlet 01 of the center passage Pc. At the same time, the conductive rubber composition RC is compressed into the surrounding passage Ps by another screw (not shown) and conveyed towards the outlet 02 of the surrounding passage Ps.

The outlet 01 and outlet 02 are opened at the front end of the head E as shown in Figs.8-11.
At the front end of the head, there is attached a pre-forming die M provided with a passage of which cross sectional area is gradually reduced from the rear end to the front end. When passing over the outlets O1 and O2, the rubber RH and rubber RC are merged and let into the gradually reducing passage of the pre-forming die M to unite each other during passing therethrough and extruded from a nozzle O3 of an extrusion die P attached to the front end of the pre-forming die M. The extrusion nozzle O3 has a shape corresponding to the cross sectional shape of the tape. Thus, the hybrid rubber tape having the predetermined cross sectional shape as explained above can be extruded.

In Fig.8, the outlet 01 of the center passage Pc is surrounded by the annular outlet 02 of the surrounding passage Ps. When compared with a shape obtained by superimposing the shape of the outlet o2 on the shape of the outlet 01, the shape of the extrusion nozzle o3 is slightly reduced in the cross sectional area, whereby during passing through the pre-forming die M and extrusion die P, the high-performance rubber composition RH and conductive rubber composition RC are compressed and united into the hybrid rubber tape T. Therefore, the tape T shown in Fig.1 can be extruded. Corresponding to the tape, the outlets O1 and O2 are rectangular.

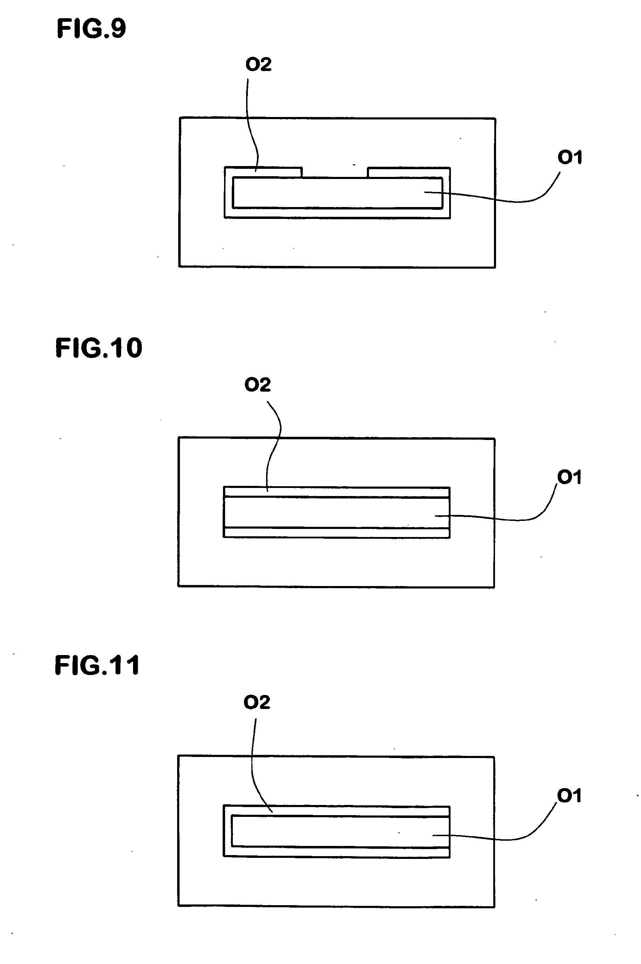

Fig.9 shows the outlet arrangement to form the hybrid rubber tape T shown in Fig.4, wherein the outlet 02 is not annular, and a blocked part is provided corresponding to the position of the part not covered with the conductive rubber composition RC.

Fig.10 shows the outlet arrangement to form the hybrid rubber tape T shown in Fig.5, wherein the outlet O2 is provided with a blocked part at a position corresponding to the position of the part not covered with the conductive rubber composition RC, namely, at both of the edges. Thus, the outlet 02 is divided into two, one on each side of the outlet O1.

Fig.11 shows the outlet arrangement to form the hybrid rubber tape T shown in Fig.6, wherein the outlet 02 is provided with a blocked part at a position corresponding to the position of the part not covered with the conductive rubber composition RC, namely, at one of the edges.

Aside from the above-mentioned one-step method using a multi-screw extruder E, the hybrid rubber tape T may be formed by the use of calender rolls or the like. For example, a tape of high-performance rubber composition RH and a tape of conductive rubber composition RC are separately formed with different extruders, and then using calender rolls, the tapes are applied each other by passing through between the rolls.

According to the present invention, the hybrid rubber tape T is overlap wound to form at least one of rubber components of a vehicle tire.

Taking a tread rubber 2G as an example, a method for manufacturing a pneumatic tire 1 will be described hereinafter.

A pneumatic tire 1 comprises a tread portion 2, a pair of sidewall portions 3, a pair of bead portions 4 each with a bead core 5 therein, a carcass 6 extending between the bead portions 4, and a belt 7 disposed in the tread portion 2 radially outside the crown portion of the carcass 6.

In this example, the tire 1 is a radial tire for passenger cars.

The carcass 6 comprises a radial ply 6A extending between the bead portions 4 through the tread portion 2 and sidewall portions 3 and turned up around the bead core 5 in each bead portion from the inside to the outside of the tire to form a pair of turned up portions 6b and a toroidal main portion 6a therebetween.

Each of the bead portions 4 is provided between the turned up portion 6b and main portion 6a of the carcass ply 6A with a bead apex rubber 8 extending radially outwardly from the bead core 5.

The belt 7 comprises a breaker 9 and optionally a band 10 disposed on the radially outside of the breaker 9. The breaker 9 is composed of at least two cross plies 9A and 9B of parallel metal cords laid at an angle of from 15 to 40 degrees with respect to the tire equator C. The band 10 is composed of a ply 10A of cords laid at a small angle of at most about 5 degrees with respect to the tire equator C.

The carcass ply 6A, breaker plies 7A and 7B and band ply 10A are each rubberized with topping rubber.

The topping rubbers for such cord plies contain electrically conductive reinforcing filler, carbon black. Thus, the vulcanized topping rubber has a volume resistivity of less than 1.0X10⁸ ohm·cm to present an electrical conductivity.

In the sidewall portion 3, a sidewall rubber 3G is disposed on the axially outside of the carcass 6 to form the outer surface of the tire.
In the bead portion 4, a clinch rubber 4G is disposed to abut the carcass 6 and to form the axially outer surface and bottom surface of the bead portion 4.
The radially inner end of the sidewall rubber 3G and the radially outer end of the clinch rubber 4G are spliced. The sidewall rubber 3G and clinch rubber 4G contain carbon black as the main reinforcing filler, therefore, after vulcanized, each rubber 3G, 4G has a volume resistivity of less than 1.0X10⁸ ohm·cm to present an electrical conductivity.

In the tread portion 2, a tread rubber 2G is disposed on the radially outside of the belt 7 to form the tread surface or the ground contacting surface.

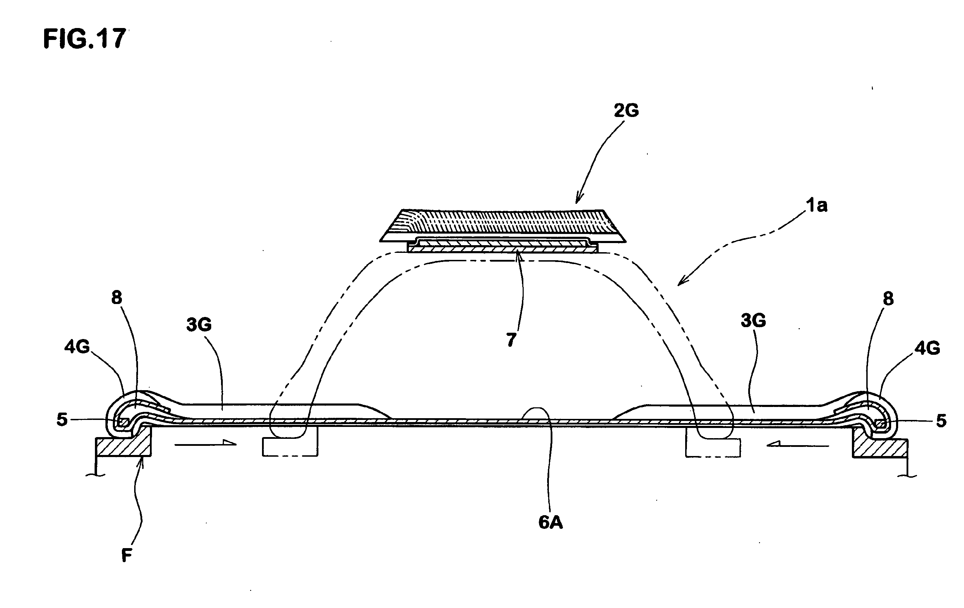

In order to form the unvulcanized tread rubber 2G in the tread portion 2 of the green tire 1a, one or more rubber tapes may be wound directly on a raw tire main body including a carcass 6, belt, sidewall rubber, etc., which body is shaped into a toroidal shape as shown in Fig.17 by chain double-dashed line. But, in this example, a belt drum D is used.

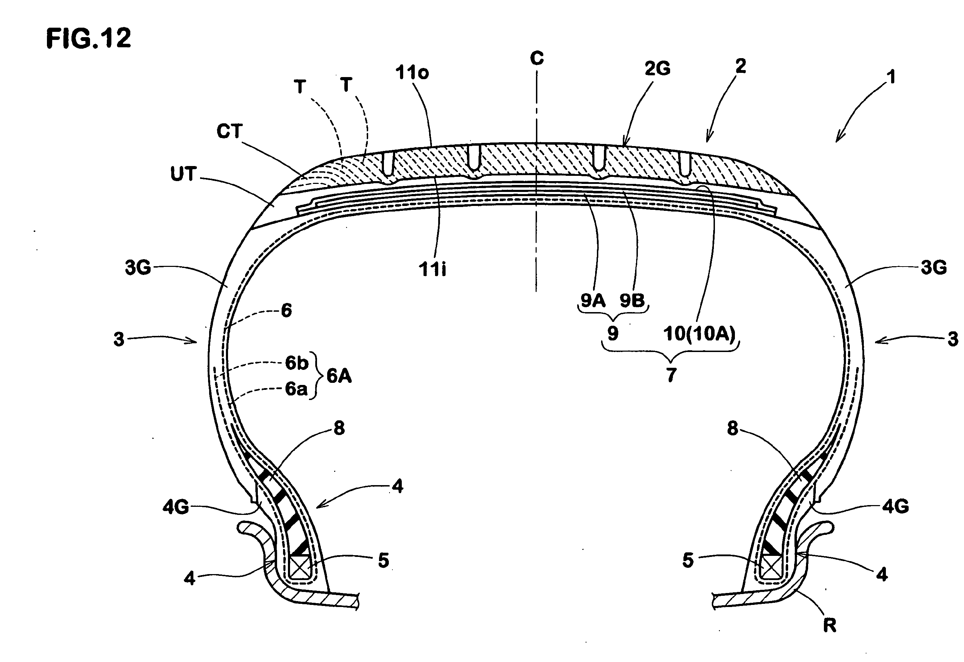

In the example shown in Fig.12, the tread rubber 2G is composed of: an undertread rubber UT disposed on the radially outside of the belt 7: and a cap tread rubber CT disposed on the radially outside of the undertread rubber UT to form the tread surface or the ground contacting surface.

The undertread rubber UT is made of a rubber which, after vulcanized, has a volume resistivity of less than 1.0×10⁸ ohm·cm to present an electrical conductivity. The axial edges of the undertread rubber UT are each spliced with the sidewall rubber 3G. Accordingly, an electrically conductive path extending from the tread portion 2 to the bead portions 4 is formed by the undertread rubber UT, sidewall rubbers 3G, clinch rubbers 4G, topping rubbers, metal cords and the like.

The cap tread rubber CT is formed by overlap winding at least one hybrid rubber tape T. in Fig.12, the boundaries of the windings of the tape T are indicated in broken lines for easy understanding.

In this embodiment, using the belt drum D, a tread assembly is formed.

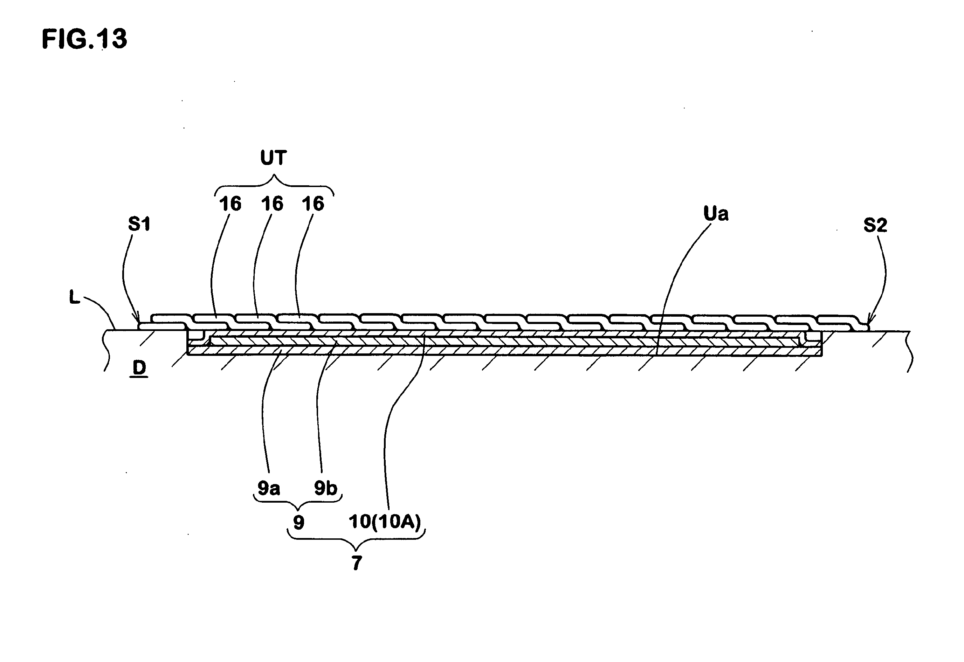

As shown in Fig.13, the belt 7 (strips 9a, 9b and 10A of rubberized cords) is first wound around a profiled face ua of the belt drum D. The drum D is provided on each side of the profiled face ua with a rising part L having a rising height corresponding to the thickness of the wound belt 7.

In this example, the undertread rubber UT is also formed on the belt 7 by overlap winding an unvulcanized rubber tape 16 spirally and continuously from its one end S1 to the other end s2. The rubber tape 16 is made of the conductive rubber composition RC only, and continuously supplied by an extruder. Thus, after vulcanized, the rubber tape 16 has a volume resistivity of less than 1.0X10⁸ ohm·cm.

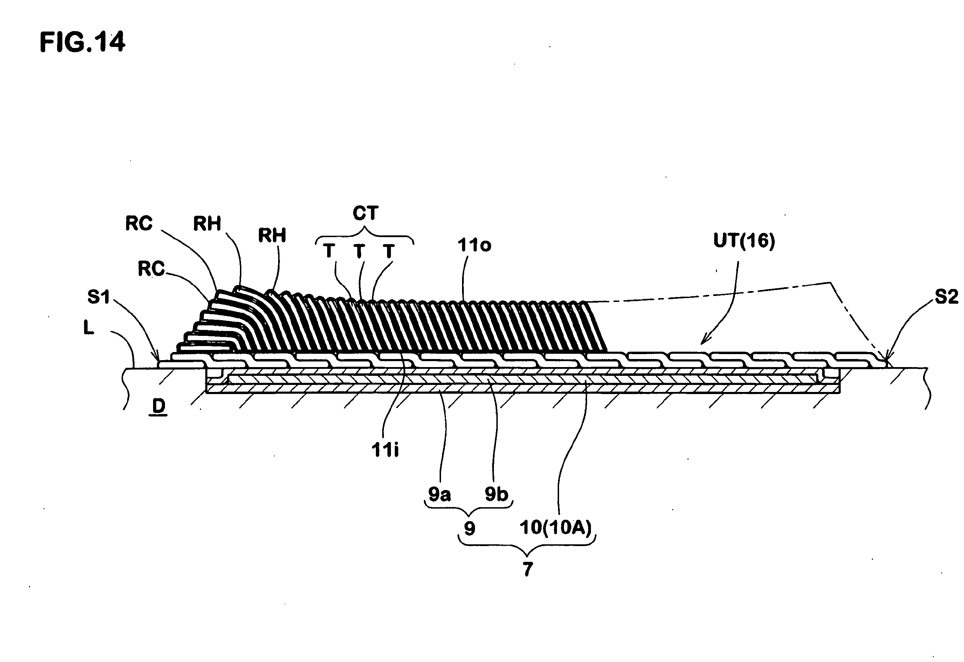

Further, on the radially outside of the undertread rubber UT wound, as shown in Fig.14, a hybrid rubber tape T is overlap wound to form the cap tread rubber CT.

The winding of the rubber tape (T, 16) can be carried out by rotating the drum D and traversing the tape (T, 16) using an applicator (not shown). The rotating speed of the drum D and the traversing speed of the rubber tape are controlled by a programmable controller so that the winding pitches are adjusted to the predetermined values. By changing the winding pitches, the thickness of the tire component can be changed.

In the example shown in Fig.14, a single hybrid tape T is continuously wound from one end S1 to the other end S2 of the cap tread rubber CT. Therefore, the winding starts from one end S1 and ends at the other end S2. But, it is also possible to wind the tape in another way. For example, the winding starts from one end S1 and turns at the other end S2 and ends at the one end S1 so that the cap tread rubber CT has a double layered structure. Aside from this, the tape can be wound in various ways.

As described above, the tread rubber 2G shown in Figs.12-14 is formed by winding the hybrid rubber tape T and conductive rubber tape 16 to have a cap-tread and undertread structure.

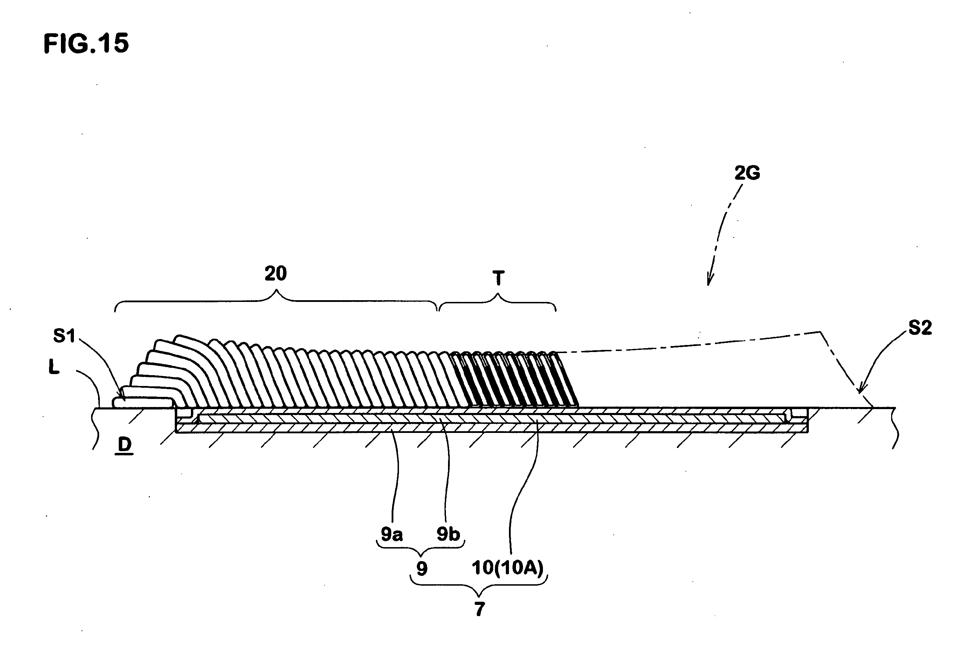

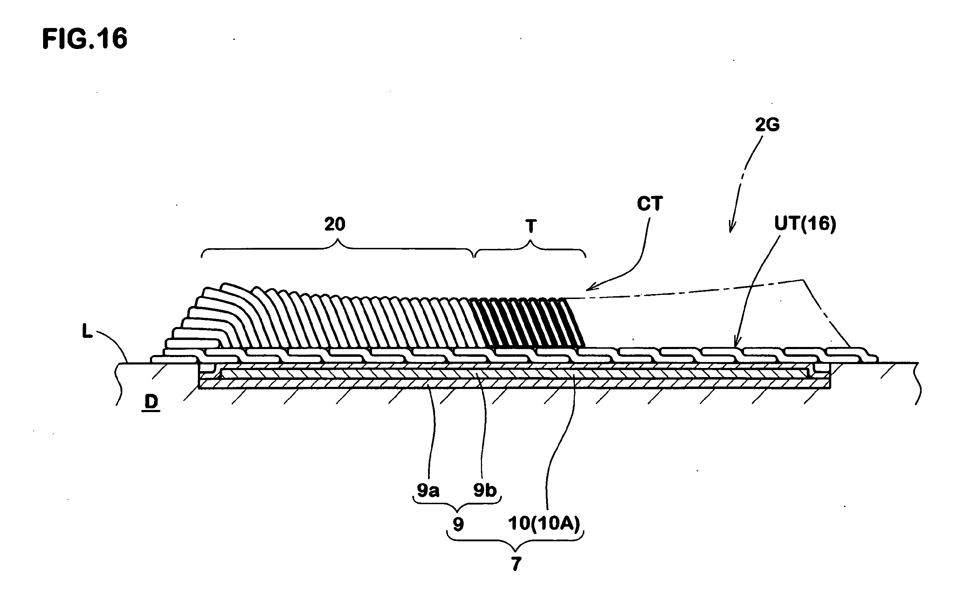

According to the invention, it is also possible to use a rubber tape 20 made of the high-performance rubber composition RH only (hereinafter the "high-performance rubber tape 20") in combination with the hybrid rubber tape T and/or conductive rubber tape 16. For example, the above-mentioned cap tread rubber CT or alternately the whole of the tread rubber 2G can be formed by overlap winding the hybrid rubber tape T and high-performance rubber tape 20. In this case, the hybrid rubber tape T is used partially in the widthwise direction as shown in Figs.15 and 16.

In Fig.15, the tread rubber 2G is formed by winding the hybrid rubber tape T and high-performance rubber tape 20 around the belt 7 wound on the drum D. In this example, the windings of the hybrid rubber tape T forms the central part of the tread rubber 2G.

In Fig.16, the tread rubber 2G is formed by winding the hybrid rubber tape T, high-performance rubber tape 20 and conductive rubber tape 16 around the belt 7 wound on the drum D. In this example, as shown in Fig.13, the undertread rubber UT is first formed by winding the conductive rubber tape 16. Then, on the radially outside of the undertread rubber UT, a cap tread rubber CT is formed by winding the hybrid rubber tape T and high-performance rubber tape 20 similarly to the tread rubber 2G in Fig.15.

In these examples, terefore, as the high-performance rubber composition RH is increased in the volume percentage of the whole, the improvements by the high-performance rubber composition RH can be maximized.

In this way, the assembly of the tread rubber 2G and belt 7 is formed.

On the other hand, as shown in Fig.17, using a tire building drum F, the raw tire components corresponding to the above-mentioned carcass ply 6A, bead cores 5 sidewall rubbers 3G, clinch rubbers 4G, bead apex 8, etc., are assembled into a cylindrical tire main body. Then, the raw cylindrical tire main body is swollen into a toroidal shape as shown in Fig.17 by chain double-dashed line.

The tread assembly is removed from the drum D and placed around the toroidal tire main body as shown in Fig.17. Then, while supporting the tread-belt assembly, the tire main body is further swollen, thereby the tread-belt assembly is integrated with the rising crown portion of the carcass. Thus, the raw tire 1a is formed.

The raw tire 1a is put in a vulcanization mold, and vulcanized into the pneumatic tire by applying heat and pressure.

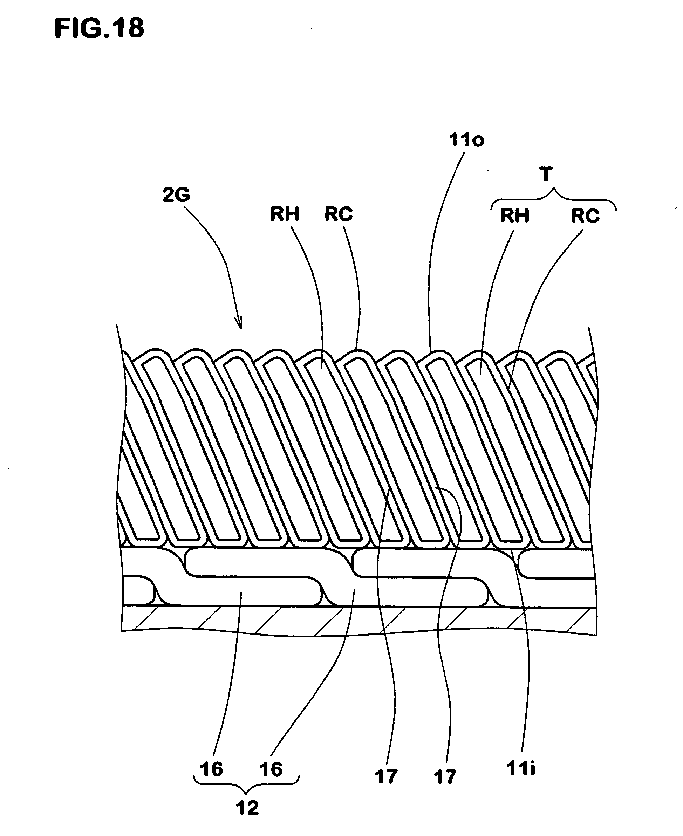

As shown in Fig.18, the conductive rubber composition RC on the surfaces of the windings of the hybrid tape T forms a large number of conductive paths 17 directly or indirectly extending from the ground contacting radially outer surface to the radially inner surface of the tread rubber. Therefore, in the vulcanized tire 1, a conductive path extending continuously from tread face to the bead bottom face is formed.

When considered the tread rubber 2G as a whole, the tread rubber 2G can be regarded as a silica rich composition. Therefore, good wet performance and low rolling resistance can be obtained. Further, the thickness of the conductive rubber composition RC and the thickness of the high-performance rubber composition RH are very small, and the conductive rubber composition RC and high-performance rubber composition RH can be well merged with each other. Thus, it is possible to treat the tread rubber 2G as an almost homogeneous rubber, without concerning the separation, uneven wear and the like. Thus, the tread pattern design freedom can be increased.

### Comparative tests

Radial tires of size 225/55R16 (rim size 16X7JJ) were made and tested for rolling resistance, and the electric resistance was measured.

Except for the cap tread rubber, all the tires had the same structure shown in Fig.12. The cap tread rubber was formed by winding a rubber tape having a width of 20 mm and a thickness of 1 mm. The specifications of the cap tread rubber and rubber tape are shown in Tables 1 and 2.

Electric resistance of tire:
According to the procedure specified by JATMA, the tire mounted on an aluminum alloy wheel rim wr was put on a polished metal plate Mp (electric resistance = under 10 ohm) isolated by an insulating board Ip (electric resistance = over 1x 10^12 ohm) as shown in Fig.19. Then, applying a voltage of 1000 V between the wheel rim and the metal plate, the electric resistance therebetween, namely, that of the tire between the tread and bead was measured with an ohm meter Om (measuring range: 1×10³-1.6x10¹⁶ ohm).
Tire pressure: 200 kPa
Tire load: 5.3 kN
Ambient temperature: 25 deg.c (RH 50%)
The results are shown in Table 1.

Rolling resistance test:
The rolling resistance was measured with a rolling resistance tester under the following conditions. The results are indicated in Table 1 by an index based on Rfe.1 being 100, wherein the smaller the index number, the smaller the rolling resistance.
Tire pressure: 200 kPa
Tire load: 4.7 kN
Running speed: 80 km/h

**Table 1**

| Tire | | Ref.1 | Ref.2 | Ex.1 | Ex.2 | Ex.3 | Ex.4 | Ex.5 | Ex.6 |
|---|---|---|---|---|---|---|---|---|---|
| Rubber tape for Cap tread | | | | | | | | | |
| | High-performance rubber RH (Table 2) | A | -- | A | A | A | A | A | A |
| | Conductive rubber RC (Table 2) | -- | B | B | B | B | B | B | B |
| | Cross sectional area of Conductive rubber to the whole (%) | 0 | 0 | 10 | 5 | 20 | 10 | 10 | 10 |
| | Length Y of Conductive rubber along the tape surface to the whole (%) | 0 | 0 | 100 | 100 | 100 | 80 | 70 | 60 |
| Electric resistance of tire (X100 mega ohm) | | 2.3 | 0.6 | 0.7 | 0.9 | 0.6 | 0.8 | 0.8 | 1.0 |
| Rolling resistance of tire | | 100 | 118 | 104 | 101 | 109 | 102 | 101 | 101 |

**Table 2 (parts by weight)**

| Composition | | A | B |
|---|---|---|---|
| Rubber base material | | | |
| | SBR | 80 | 80 |
| | BR | 20 | 20 |
| | Silica | 50 | 10 |
| | Carbon black | 10 | 50 |
| Zinc oxide | | 3.0 | 3.0 |
| Stearic acid | | 2.0 | 2.0 |
| Age resistor | | 2.0 | 2.0 |
| Aroma oil | | 20 | 20 |
| Sulfur | | 1.5 | 1.5 |

In the above-mentioned examples, the hybrid rubber tape T is used to make the tread rubber 2G. But, it is of course possible to use the hybrid rubber tape T to make other tire components such as sidewall rubber partly or wholly.

In order to provide the conductive rubber composition RC with an electrical conductivity, carbon black is utilized in the above-mentioned examples. But, it is also possible to utilize ionic conductors such as lithium salts in stead of carbon black or in combination with carbon black.

The high-performance rubber composition RH in the above-mentioned example is a silica rich composition. But, it is not always necessary to be a silica rich composition. According to the requirements, it may be another kind of composition.

## Claims

1. A hybrid rubber tape (T) to be wound into an unvulcanized rubber component of a vehicle tire, made of an unvulcanized high-performance rubber composition (RH) and an unvulcanized conductive rubber composition (RC), wherein
the unvulcanized conductive rubber composition forms a surface layer forming at least a part of the surface of the hybrid rubber tape (T), and
the unvulcanized conductive rubber composition (RC) contains electroconductive filler, and
the unvulcanized high-performance rubber composition (RH) contains less electroconductive filler or alternatively no electroconductive filler so that, when vulcanized, a volume resistivity of the conductive rubber composition (RC) becomes less than the volume resistivity of the high-performance rubber composition (RH), wherein the high-performance rubber composition (RH) is exposed only (1) in a center part of one side of the tape (T) or (2) at both edges of the tape (T) or (3) at one of the edges of the tape (T), whereby the remaining part of the surface of the hybrid rubber tape (T) is formed by said surface layer of the conductive rubber composition (RC) having a volume resistivity of less than 1.0X10^8 ohm cm after vulcanization, and
in the cross section of the hybrid rubber tape (T), the occupied area of the conductive rubber composition (RC) of the surface layer is not less than 3 %, but not more than 20 % of the overall cross sectional area.

2. The hybrid rubber tape (T) according to claim 1, which has a width in a range of 5 to 30 mm and a thickness Ts in a range of 0.5 to 2.0 mm.

3. The hybrid rubber tape (T) according to claim 1 or 2, wherein the thickness is substantially constant from one edge to the other edge of the tape.

4. The hybrid rubber tape (T) according to claim 1 or 2, wherein the thickness is gradually decreased from the center towards each edge of the tape.

5. The hybrid rubber tape (T) according to claim 1 or 2, wherein in the cross section of the hybrid rubber tape (T),
when measured along the surface of the tape,
a total length (Y) of the conductive rubber composition (RC) is at least 70 % of the overall length.

6. A vehicle tire comprising a tire (1) component composed of windings of at least one hybrid rubber tape (T), wherein
the hybrid rubber tape (T) is made of a high-performance rubber composition (RH) and a conductive rubber composition (RC),
the conductive rubber composition (RC) forms a surface layer forming at least a part of the surface of the hybrid rubber tape (T), and
the surface layer has a volume resistivity of less than 1.0X10^8 ohm cm, wherein
the high-performance rubber composition is exposed only (1) in a center part of one side of the tape (T) or (2) at both edges of the tape (T) or (3) at one of the edges of the tape (T), whereby the remaining part of the surface of the hybrid rubber tape (T) is formed by said surface layer of the conductive rubber composition (RC), and
in the cross section of the hybrid rubber tape (T), the occupied area of the conductive rubber composition (RC) is not less than 3 %, but not more than 20 % of the overall cross sectional area.

7. The vehicle tire (1) according to claim 6, wherein
said tire component is a tread rubber having a ground contacting surface to which said conductive rubber composition (RC) extends, and
said conductive rubber composition (RC) is electrically connected to a tire surface which contacts with a wheel rim (R) when the tire is mounted thereon.

8. The vehicle tire according to claim 6, wherein in the cross section of the hybrid rubber tape (T),
the conductive rubber composition (RC) forms at least 70 % of the circumference of the hybrid rubber tape (T).

9. The vehicle tire according to claim 7, wherein the electrically conductive path connecting the conductive rubber composition to said tire surface includes a tread reinforcing cord layer disposed radially inside the tread rubber.

10. The vehicle tire according to claim 7, wherein said tread rubber is composed of a cap tread rubber including said windings, and an undertread rubber made of a conductive rubber composition.

11. In a method of manufacturing a vehicle tire (1) having a tire component comprising:
winding at least one unvulcanized rubber tape (T) into said tire component,
the improvement comprises
said unvulcanized rubber tape is a hybrid rubber tape (T) made of a high-performance rubber composition (RH) and a conductive rubber composition (RC), wherein
the conductive rubber composition (RC) forms a surface layer forming at least a part of the surface of the hybrid rubber tape (T),
the hybrid rubber tape (T) is wound so that said conductive rubber composition (RC) of the windings thereof extends across the cross section of the tire component, whereby
in the vulcanized vehicle tire, an electrically conductive path having a volume resistivity of less than 1.0X10^8 ohm cm is formed by the conductive rubber composition (RC), wherein
the high-performance rubber composition (RH) is exposed only (1) in a center part of one side of the tape (T) or (2) at both edges of the tape (T) or (3) at one of the edges of the tape (T), whereby the remaining part of the surface of the hybrid rubber tape (T) is formed by said surface layer of the conductive rubber composition (RC), and in the cross section of the hybrid rubber tape (T), the occupied area of the conductive rubber composition (RC) is not less than 3 %, but not more than 20 % of the overall cross sectional area.

## Patentansprüche

1. Hybrides Kautschukband (T) zur Wicklung zu einer unvulkanisierten Kautschukkomponente eines Fahrzeugreifens, das aus einer unvulkanisierten Hochleistungskautschukmischung (RH) und einer unvulkanisierten leitenden Kautschukmischung (RC) hergestellt ist,
wobei
die unvulkanisierte leitende Kautschukmischung eine Oberflächenschicht bildet, die zumindest einen Teil der Oberfläche des hybriden Kautschukbandes (T) bildet, und
die unvulkanisierte leitende Kautschukmischung (RC) elektrisch leitenden Füllstoff enthält, und
die unvulkanisierte Hochleistungskautschukmischung (RH) weniger elektrisch leitenden Füllstoff oder alternativ keinen elektrisch leitenden Füllstoff enthält, sodass, wenn sie vulkanisiert ist, ein spezifischer Volumenwiderstand der leitenden Kautschukmischung (RC) kleiner als der spezifische Volumenwiderstand der Hochleistungskautschukmischung (RH) wird, wobei die Hochleistungskautschukmischung (RH) nur freigelegt ist (1) in einem mittleren Teil von einer Seite des Bandes (T) oder (2) an beiden Kanten des Bandes (T) oder (3) an einer der Kanten des Bandes (T), wobei der verbleibende Teil der Oberfläche des hybriden Kautschukbandes (T) durch die Oberflächenschicht der leitenden Kautschukmischung (RC) gebildet ist, die nach der Vulkanisation einen spezifischen Volumenwiderstand von weniger als 1,0 x 10⁸ Ω · cm aufweist,
in dem Querschnitt des hybriden Kautschukbandes (T) die eingenommene Fläche der leitenden Kautschukmischung (RC) der Oberflächenschicht nicht kleiner als 3 %, aber nicht größer als 20 % der Gesamtquerschnittsfläche ist.

2. Hybrides Kautschukband (T) nach Anspruch 1,
das eine Breite im Bereich von 5 bis 30 mm und eine Dicke Ts in einem Bereich von 0,5 bis 2,0 mm aufweist.

3. Hybrides Kautschukband (T) nach Anspruch 1 oder 2,
wobei die Dicke von einer Kante zur anderen Kante des Bandes im Wesentlichen konstant ist.

4. Hybrides Kautschukband (T) nach Anspruch 1 oder 2,
wobei die Dicke allmählich von der Mitte in Richtung jeder Kante des Bandes verringert ist.

5. Hybrides Kautschukband (T) nach Anspruch 1 oder 2,
wobei im Querschnitt des hybriden Kautschukbandes (T), wenn längs der Oberfläche des Bandes gemessen wird, eine Gesamtlänge (Y) der leitenden Kautschukmischung (RC) zumindest 70 % der Gesamtlänge beträgt.

6. Fahrzeugreifen mit einer Komponente des Reifens (1), die aus Wicklungen zumindest eines hybriden Kautschukbandes (T) zusammengesetzt ist, wobei
das hybride Kautschukband (T) aus einer Hochleistungskautschukmischung (RH) und einer leitenden Kautschukmischung (RC) hergestellt ist,
wobei die leitende Kautschukmischung (RC) eine Oberflächenschicht bildet, die zumindest einen Teil der Oberfläche des hybriden Kautschukbandes (T) bildet, und
die Oberflächenschicht einen spezifischen Volumenwiderstand von weniger als 1,0 x 10⁸ Ω · cm aufweist, wobei
die Hochleistungskautschukmischung nur freigelegt ist (1) in einem mittleren Teil von einer Seite des Bandes (T) oder (2) an beiden Kanten des Bandes (T) oder (3) an einer der Kanten des Bandes (T), wobei der verbleibende Teil der Oberfläche des hybriden Kautschukbandes (T) durch die Oberflächenschicht der leitenden Kautschukmischung (RC) gebildet ist, und
in dem Querschnitt des hybriden Kautschukbandes (T) die eingenommene Fläche der leitenden Kautschukmischung (RC) der Oberflächenschicht nicht kleiner als 3 %, aber nicht größer als 20 % der Gesamtquerschnittsfläche ist.

7. Fahrzeugreifen (1) Anspruch 6, wobei
die Reifenkomponente ein Laufflächenkautschuk mit einer Aufstandsfläche ist, bis zu der sich die leitende Kautschukmischung (RC) erstreckt, und
die leitende Kautschukmischung (RC) elektrisch mit einer Reifenoberfläche verbunden ist, die mit einer Radfelge (R) in Kontakt steht, wenn der Reifen darauf aufgezogen ist.

8. Fahrzeugreifen (1) nach Anspruch 6,
wobei in dem Querschnitt des hybriden Kautschukbandes (T) die leitende Kautschukmischung (RC) zumindest 70 % des Umfangs des hybriden Kautschukbandes (T) bildet.

9. Fahrzeugreifen nach Anspruch (7),
wobei die elektrisch leitende Strecke, die die leitende Kautschukmischung mit der Reifenoberfläche verbindet, eine Laufflächenverstärkungskordschicht umfasst, die radial innerhalb des Laufflächenkautschuks angeordnet ist.

10. Fahrzeugreifen nach Anspruch 7,
wobei der Laufflächenkautschuk aus einem Decklaufflächenkautschuk zusammengesetzt ist, der die Wicklungen umfasst, und einem Basisgummi-Kautschuk, der aus einer leitenden Kautschukmischung hergestellt ist.

11. Verfahren zum Herstellen eines Fahrzeugreifens (1), der eine Reifenkomponente aufweist, das umfasst, dass:
zumindest ein unvulkanisiertes Kautschukband (T) zu der Reifenkomponente gewickelt wird,
wobei die Verbesserung umfasst, dass
das unvulkanisierte Kautschukband ein hybrides Kautschukband (T) ist, das aus einer Hochleistungskautschukmischung (RH) und einer leitenden Kautschukmischung (RC) hergestellt wird, wobei die leitende Kautschukmischung (RC) eine Oberflächenschicht bildet, die zumindest einen Teil der Oberfläche des hybriden Kautschukbandes (T) bildet,
das hybride Kautschukband (T) derart gewickelt wird, dass die leitende Kautschukmischung (RC) der Wicklungen davon sich über den Querschnitt der Reifenkomponente erstreckt, wobei in dem vulkanisierten Fahrzeugreifen durch die leitende Kautschukmischung (RC) eine elektrisch leitende Strecke mit einem spezifischen Volumenwiderstand von weniger als 1,0 x 10⁸ Ω · cm gebildet wird, wobei
die Hochleistungskautschukmischung (RH) nur freigelegt wird (1) in einem mittleren Teil von einer Seite des Bandes (T) oder (2) an beiden Kanten des Bandes (T) oder (3) an einer der Kanten des Bandes (T), wobei der verbleibende Teil der Oberfläche des hybriden Kautschukbandes (T) durch die Oberflächenschicht der leitenden Kautschukmischung (RC) gebildet wird, und in dem Querschnitt des hybriden Kautschukbandes (T) die eingenommene Fläche der leitenden Kautschukmischung (RC) nicht kleiner als 3 %, aber nicht größer als 20 % der Gesamtquerschnittsfläche ist.

## Revendications

1. Ruban en caoutchouc hybride (T) destiné à être enroulé pour donner un composant en caoutchouc non vulcanisé d'un pneumatique de véhicule, produit en une composition de caoutchouc non vulcanisé à haute performance (RH) et en une composition de caoutchouc non vulcanisé conducteur (RC), dans lequel
la composition de caoutchouc non vulcanisé conducteur forme une couche de surface formant au moins une partie de la surface du ruban en caoutchouc hybride (T), et
la composition de caoutchouc non vulcanisé conducteur (RC) contient une charge électroconductrice, et
la composition de caoutchouc non vulcanisé à haute performance (RH) contient moins de charge électroconductrice ou en variante aucune charge électroconductrice de telle façon que, lorsqu'elle est vulcanisée, la résistivité volumique de la composition de caoutchouc conducteur (RC) devient inférieure à la résistivité volumique de la composition de caoutchouc à haute performance (RH),
dans lequel la composition de caoutchouc à haute performance (RH) est exposée uniquement (1) dans une partie centrale d'un côté du ruban (T), ou (2) au niveau des deux bords du ruban (T), ou encore (3) au niveau de l'un des bords du ruban (T), grâce à quoi la partie restante de la surface du ruban en caoutchouc hybride (T) est formée par ladite couche de surface de la composition de caoutchouc conducteur (RC) ayant une résistivité volumique inférieure à 1,0 x 10⁸ ohm·cm après vulcanisation, et
dans la section transversale du ruban en caoutchouc hybride (T) la zone occupée par la composition de caoutchouc conducteur (RC) de la couche de surface n'est pas inférieure à 3 %, mais pas supérieure à 20 % de l'aire de section transversale totale.

2. Ruban en caoutchouc hybride (T) selon la revendication 1, qui possède une largeur dans une plage de 5 à 30 mm et une épaisseur Ts dans une plage de 0,5 à 2,0 mm.

3. Ruban en caoutchouc hybride (T) selon la revendication 1 ou 2, dans lequel l'épaisseur est sensiblement constante depuis un bord jusqu'à l'autre bord du ruban.

4. Ruban en caoutchouc hybride (T) selon la revendication 1 ou 2, dans lequel l'épaisseur diminue progressivement depuis le centre vers chaque bord du ruban.

5. Ruban en caoutchouc hybride (T) selon la revendication 1 ou 2, dans lequel, dans la section transversale du ruban en caoutchouc hybride (T), lorsqu'on mesure le long de la surface du ruban, une longueur totale (Y) de la composition de caoutchouc conducteur (RC) est au moins 70 % de la longueur totale.

6. Pneumatique de véhicule comprenant un composant de pneumatique (1) composé d'enroulements d'au moins un ruban en caoutchouc hybride (T), dans lequel :
le ruban en caoutchouc hybride (T) est produit en une composition de caoutchouc à haute performance (RH) et en une composition de caoutchouc conducteur (RC), la composition de caoutchouc conducteur (RC) forme une couche de surface formant au moins une partie de la surface du ruban en caoutchouc hybride (T), et la couche de surface a une résistivité volumique inférieure à 1,0 x 10⁸ ohm·cm, dans lequel
la composition de caoutchouc à haute performance est exposée uniquement (1) dans une partie centrale d'un côté du ruban (T), ou (2) au niveau des deux bords du ruban (T), ou encore (3) au niveau de l'un des bords du ruban (T), grâce à quoi la partie restante de la surface du ruban en caoutchouc hybride (T) est formée par ladite couche de surface de la composition de caoutchouc conducteur (RC), et
dans la section transversale du ruban en caoutchouc hybride (T), la zone occupée par la composition de caoutchouc conducteur (RC) n'est pas inférieure à 3 %, mais pas supérieure à 20 % de l'aire de section transversale totale.

7. Pneumatique de véhicule (1) selon la revendication 6, dans lequel ledit composant de pneumatique est un caoutchouc de bande de roulement ayant une surface de contact au sol sur laquelle s'étend ladite composition de caoutchouc conducteur (RC), et
ladite composition de caoutchouc conducteur (RC) est électriquement connectée à une surface du pneumatique qui est en contact avec une jante de roue (R) quand le pneumatique est monté sur celle-ci.

8. Pneumatique de véhicule selon la revendication 6, dans lequel dans la section transversale du ruban en caoutchouc hybride (T),
la composition de caoutchouc conducteur (RC) forme au moins 70 % de la circonférence du ruban en caoutchouc hybride (T).

9. Pneumatique de véhicule selon la revendication 7, dans lequel
le trajet électriquement conducteur qui connecte la composition de caoutchouc conducteur à ladite surface du pneumatique inclut une couche de câblés de renforcement pour la bande de roulement, disposée radialement à l'intérieur du caoutchouc de la bande de roulement.

10. Pneumatique de véhicule selon la revendication 7, dans lequel
ledit caoutchouc de la bande de roulement est composé d'un caoutchouc de bande de roulement extérieure qui inclut lesdits enroulements, et d'un caoutchouc de bande de roulement intérieure réalisé en une composition de caoutchouc conducteur.

11. Dans un procédé de fabrication d'un pneumatique de véhicule (1) ayant un composant de pneumatique, comprenant :
d'enrouler au moins un ruban en caoutchouc non vulcanisé (T) pour donner ledit composant de pneumatique,
le perfectionnement comprenant :
ledit ruban en caoutchouc non vulcanisé est un ruban en caoutchouc hybride (T) produit en une composition de caoutchouc à haute performance (RH) et en une composition de caoutchouc conducteur (RC),
la composition de caoutchouc conducteur (RC) forme une couche de surface formant au moins une partie de la surface du ruban en caoutchouc hybride (T),
le ruban en caoutchouc hybride (T) est enroulé de telle façon que ladite composition de caoutchouc conducteur (RC) des enroulements de celui-ci s'étend à travers la section transversale du composant de pneumatique,
dans le pneumatique de véhicule vulcanisé, un trajet électriquement conducteur ayant une résistivité volumique inférieure à 1,0 x 10⁸ ohm·cm est formé par la composition de caoutchouc conducteur (RC),
la composition de caoutchouc à haute performance (RH) est exposée uniquement (1) dans une partie centrale d'un côté du ruban (T), ou (2) au niveau des deux bords du ruban (T), ou encore (3) au niveau de l'un des bords du ruban (T), grâce à quoi la partie restante de la surface du ruban en caoutchouc hybride (T) est formée par ladite couche de surface de la composition de caoutchouc conducteur (RC), et
dans la section transversale du ruban en caoutchouc hybride (T), la zone occupée par la composition de caoutchouc conducteur (RC) n'est pas inférieure à 3 %, mais pas supérieure à 20 % de l'aire de section transversale totale.
